# EUROPÄISCHE PATENTSCHRIFT

(11) **EP 1 540 288 B1**
(45) Veröffentlichungstag und Bekanntmachung des Hinweises auf die Patenterteilung: **01.08.2007**
(21) Anmeldenummer: 03735259.8
(22) Anmeldetag: 15.04.2003
(51) Int. Cl.: G01F 1/00

(54) **VERFAHREN ZUR DURCHFLUSSMESSUNG IN KANALSCHÄCHTEN**
METHOD FOR MEASURING THE FLOW RATE IN CHANNEL SHAFTS
PROCEDE DE MESURE DE DEBIT DANS DES REGARDS D'EGOUT

(30) Priorität: 17.04.2002 DE 10217163; 22.08.2002 DE 10238539
(43) Veröffentlichungstag der Anmeldung: 15.06.2005
(73) Patentinhaber: Komposch, Markus, 89426 Mödingen (DE)
(72) Erfinder: Komposch, Markus, 89426 Mödingen (DE)
(74) Vertreter: Gallo, Wolfgang
(86) Internationale Anmeldenummer: PCT/DE2003/001250
(87) Internationale Veröffentlichungsnummer: WO 2003/087732

(56) Entgegenhaltungen:
- WO-A-01/51897
- FR-A- 2 486 650

## Beschreibung

Die Erfindung betrifft ein Verfahren zur Erfassung bzw. Messung der Durchflussmenge in Kanälen an Kanalschachtpositionen.

In Abwasserkanalsystemen, die im Boden, zum Beispiel unter Straßen oder Wegen verlegt sind, ist es zur Zustandsüberwachung der Kanäle notwendig, das Ausmaß des Eindringens von Fremdwasser oder das Ausmaß der Versickerung von Wasser aus dem Kanal zu bewerten und dadurch Aufschluß über die Dichtheit des Kanals bzw. einzelner Kanalabschnitte sowie auch einer möglichen Gefährdung des Grundwassers durch Schmutzwasseraustritt aus dem Kanal zu erhalten. Dazu muß die Durchflussmenge im Kanal an mehreren aufeinanderfolgenden Stellen, nämlich in den einzelnen Kanalschächten, erfasst bzw. gemessen werden. Man erhält dann beispielsweise in einem Abwasserkanal von Kanalschacht zu Kanalschacht aufeinanderfolgende Durchflussmengenwerte. Die Untersuchung führt man zweckmäßigerweise in der Nacht zu einem Zeitpunkt durch, wo im wesentlichen keine Einleitungen aus Haushalten oder Betrieben in den Kanal erfolgen. Es kann dann gegebenenfalls auch eine Testwassereinleitung an einer stromaufwärtigen Stelle erfolgen.

Sind die gemessenen Durchflusswerte an zwei aufeinanderfolgenden Kanalschächten gleich, ist das ein Indiz dafür, daß weder Fremdwasser in den Kanal eindringt noch Wasser aus dem Kanal versickert. Ist der Durchflusswert am folgenden Schacht gegenüber demjenigen am vorangegangen Schacht höher, deutet das auf Eindringen von Fremdwasser hin; ist der Durchflusswert am zweiten Schacht niedriger als am vorangegangenen Schacht, deutet das auf ein Austreten von Wasser aus dem Kanal hin; beides bedeutet, daß der Kanal undicht ist.

Die Differenz der Durchflusswerte quantifiziert auch das Maß des Eindringens bzw. des Austretens von Wasser und damit die Schadhaftigkeit des Kanals, die dann mit bekannten Methoden und Geräten näher untersucht werden kann.

Das Problem bei den Durchflussmessungen liegt in der mühsamen Durchführung derselben. Nach der bisherigen Vorgehensweise ist es erforderlich, in den Kanal ein Durchflussmessgerät einzubauen und nach Durchführen der Messung wieder auszubauen, was das mehrfache Einsteigen in den Schacht, das mühselige Installieren des Geräts, und das anschließende Wiederausbauen des Geräts umfasst, und was für das Arbeitspersonal eine schmutzige und unangenehme Arbeit darstellt. Bei manchen Messverfahren ist es sogar nötig, den Kanal umzupumpen, da sie nur bei gefülltem Rohr funktionieren.

Aufgabe der Erfindung ist es, einen eleganteren Weg der Durchflussmessung zu finden.

Diese Aufgabe wird gemäß der Erfindung durch das im Anspruch 1 angegebene Verfahren gelöst. Eine alternative Ausführungsform des erfindungsgemäßen Verfahrens, die auf dem gleichen Lösungsprinzip beruht, ist Gegenstand des Anspruchs 2.

Die Erfindung sieht also ein optisches Messverfahren vor, das darauf beruht, daß der Flüssigkeitspegel in der Rohröffnung optisch aus einer Position über oder in der Schachtöffnung erfasst wird.

Aus der WO-A-01/51 897 ist ein Verfahren zur Durchflußmessung an einem Wasser- oder Abwasserkanal an sich bekannt, wobei an einer Meßstelle der Kanal schräg von oben und von der Seite her optisch erfaßt wird, um den Pegelstand an einer Kanalwand zu erfassen.

Bei ungünstigen Verhältnissen von Schachttiefe und Rohrdurchmesser kann auch aus dem Schacht axial in das Rohr hinein fotografiert werden, um die Messung in derselben Weise an einer Rohrmuffe mit bekanntem Durchmesserwert als Bezugsgröße vorzunehmen.

Im Falle der Erfassung von der Schachtöffnung aus, was die Regel darstellen sollte und wegen der Einfachheit anzustreben ist, erscheinen wegen der Perspektive Eintrittsöffnung und Austrittsöffnung des Kanalrohrs im Schacht als Ovale, und die größte Breite dieser Ovale bezeichnet eine Durchmesserlinie. Die Flüssigkeitsoberfläche erzeugt bei der optischen Erfassung eine zweite Linie, die je nach Füllungspegel des Rohres mehr oder weniger gegenüber der Durchmesserlinie verkürzt ist und zugleich durch die Perspektive etwas seitlich versetzt erscheint, also gegenüber der Durchmesserlinie deutlich und differenziert in Erscheinung tritt. Bei Kenntnis des Rohrdurchmessers als Bezugsgröße kann durch das Verhältnis der Durchmesserlänge zur Sehnenlänge der Pegellinie der Füllungsquerschnitt mathematisch ermittelt werden, und unter Hinzunahme der Fließgeschwindigkeit kann die Durchflussmenge berechnet werden. Die Fließgeschwindigkeit kann auf zweckmäßige Weise bestimmt werden, beispielsweise ebenfalls optisch dadurch, daß in definiertem Zeitabstand Fotos genommen und der Versatz von Fließbildelementen, beispielsweise in das fließende Wasser geworfenen schwimmfähigen Partikeln, im Verhältnis zu einer bekannten fixen Strecke zeitlich gemessen wird. Sofern vorhanden, können als Fließgeschwindigkeitswerte auch bekannte Fließgeschwindigkeitswerte für die einzelnen Kanalabschnitte bzw. Schächte beispielsweise aus Tabellen entnommen oder aus Gefälle- und Materialwerten des Kanalkatasters errechnet werden.

Das erfindungsgemäße Verfahren hat den Vorteil, daß es schnell und mit relativ wenig Aufwand zu bewerkstelligen ist. Es braucht in der Regel niemand in den Schacht einzusteigen, und die Tiefe des Schachts spielt auch keine Rolle, da Verhältniswerte ermittelt werden. Zur Messung wird die Schachtabdeckung geöffnet, ein optisches Gerät wie beispielsweise ein Fotoapparat wird (eventuell mittels eines entsprechenden Gestells) über oder in der Schachtöffnung platziert, und der Schacht wird mit einer zweckmäßig platzierten Lichtquelle ausgeleuchtet. Dabei kann die Lichtquelle vorteilhaft so platziert werden, daß eine nicht gleichmäßige Ausleuchtung erfolgt, sondern Bildkontraste gefördert werden, die einen plastischen Eindruck im interessierenden Messfeld verstärken. Bei großer Schachttiefe kann auch das optische Gerät innerhalb des Schachts mittels eines Hängegestells oder eines am Schachtboden aufgesetzten Gestells, das von oben herabgelassen werden kann, platziert werden. Bei ungünstigen Verhältnissen, beispielsweise wenn ein unsauberer, zum Beispiel stark unrunder oder nicht dem Kanalrohr entsprechender Öffnungsquerschnitt der Austritts- oder Eintrittsöffnung am Schacht vorhanden ist, kann auch in das Rohr axial hineinfotografiert werden, in dem das optische Gerät entsprechend in den Schacht hinabgehalten wird, um die nächste Rohrmuffe des Kanalrohrs als bekannte Bezugsgröße zu nehmen und dort den Verhältniswert von Durchmesserlinie zu Füllpegellinie zu ermitteln.

Ein weiterer Vorteil des erfindungsgemäßen Verfahrens besteht darin, dass durch die Meßfotos ein archivierbarer dokumentarischer Nachweis über die Messergebnisse vorliegt.

Die Erfindung wird nachstehend unter Bezugnahme auf die anliegenden Zeichnungen noch mehr im einzelnen erläutert. In den Zeichnungen zeigt:
- Fig. 1: im Schnitt einen Kanalschacht, an dem das Verfahren durchgeführt wird,
- Fig. 2: einen gegenüber der Darstellung in Fig. 1 um 90° gedrehten Schnitt durch den unteren Bereich des Kanalschachts, der den Querschnitt durch die Fließrinne im Kanalschacht und den Querschnitt des ausmündenden Kanalrohrs zeigt,
- Fig. 3: eine schematisierte Darstellung eines Messbilds,
- Fig. 4: eine Darstellung ähnlich Fig. 1, welche die Durchführung des Verfahrens bei größeren Schachttiefen zeigt,
- Fig. 5: nochmals eine Darstellung ähnlich Fig. 1, welches eine abgewandelte Form der Durchführung des Verfahrens zeigt, und
- Fig. 6: in schematisierter Darstellung ein nach der Variante nach Fig. 5 erhaltenes Messbild.

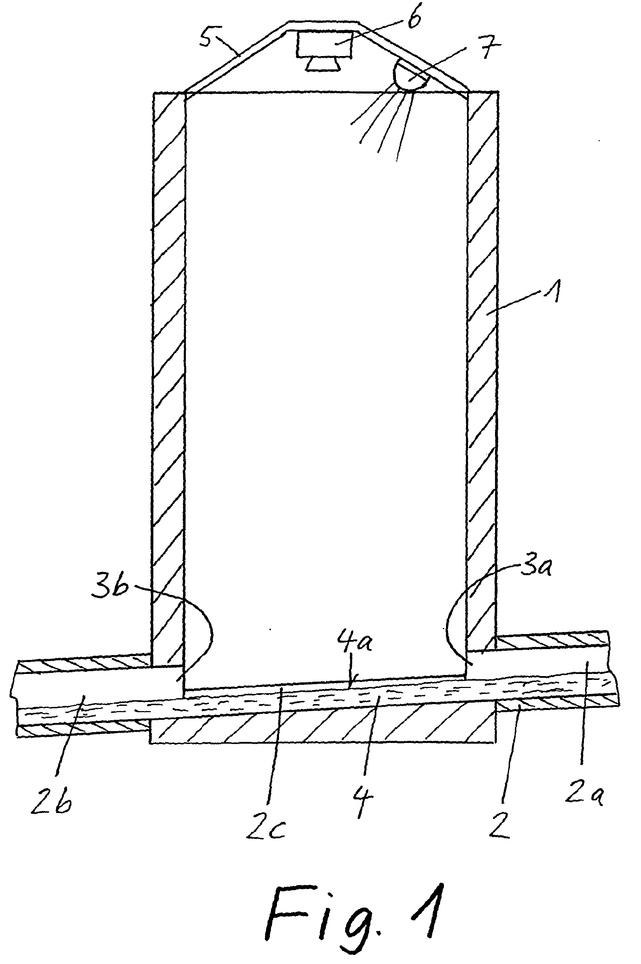

Figur 1 zeigt im Schnitt einen Kanalschacht 1 über einem Abwasserkanal 2 mit einem, bezogen auf den Schacht 1, stromaufwärtigen Kanalabschnitt 2a, einem stromabwärtigen Kanalabschnitt 2b, und einer Fließrinne 2c innerhalb des Schachts 1.

Der Kanal 2 besteht aus Kanalrohren mit spezifischem Querschnitt (z. B. Kreisquerschnitt, Ei-Profil usw.; im vorliegenden Ausführungsbeispiel mit Kreisquerschnitt). Die Fließrinne 2c innerhalb des Kanalschachts hat in der Regel Halbkreis-, Trapez- oder Sonderprofilquerschnitt; sie wird meist aus Ortbeton hergestellt. Der stromaufwärtige und der stromabwärtige Kanalabschnitt 2a und 2b münden jeweils mit einer in diesem Fall kreisrunden Eintrittsöffnung 3a bzw. Austrittsöffnung 3b in den Kanalschacht 1 ein bzw. aus diesem aus. In dem Kanal fließt ein Wasserstrom 4 mit einer Oberfläche bzw. einem Füllpegel 4a.

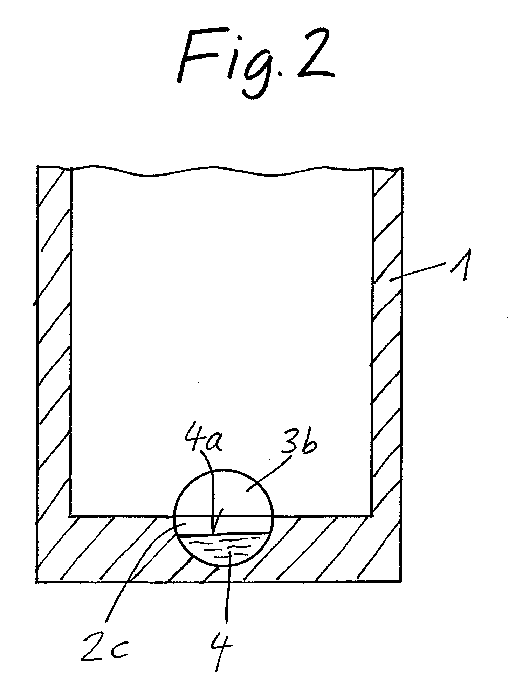

In Figur 2 ist der Füllungsquerschnitt des Kanalrohrs sichtbar, der durch den Wasserstrom 4 eingenommen wird.

Figur 1 zeigt weiter ein über dem geöffnetem oberen Schachtende installiertes Gestell 5 mit einem Fotoapparat 6 und einer Lichtquelle 7 zur Messbildaufnahme.

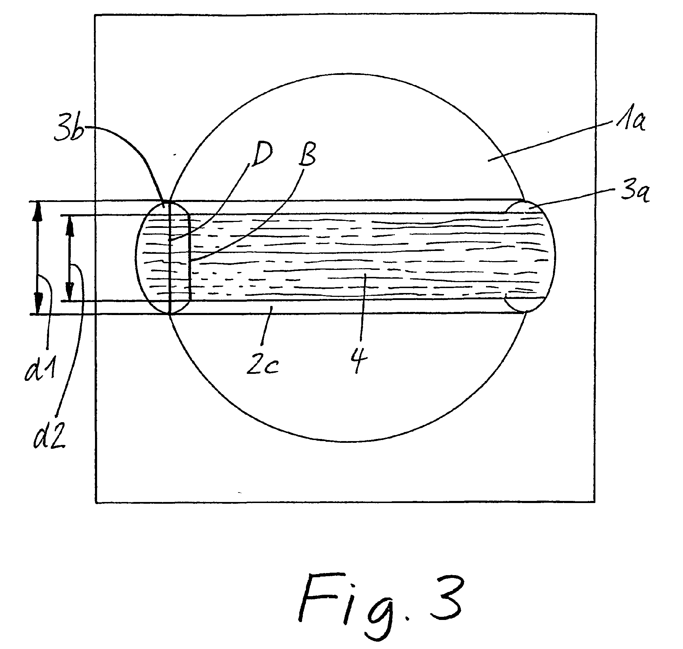

Figur 3 zeigt in schematischer Darstellung ein mögliches Messbild, das, von oben zentrisch in den Schacht hineinfotografiert, eine Kreisfläche 1a (bei kreisförmigem Schacht) als Schachtboden zeigt, und in Gestalt von Ovalen die Eintrittsöffnung 3a bzw. Austrittsöffnung 3b, weiter in Draufsicht die Fließrinne 2c, und ebenfalls in Draufsicht den Wasserstrom 4, zeigt, der als Band erscheint, das entsprechend dem Füllpegel der Fließrinne un des Rohres mehr oder weniger breit erscheint.

An der Auslassöffnung 3b (das gleiche kann an der Einlassöffnung 3a gemacht werden) ist nun als Linie D die Durchmesserlinie der Auslassöffnung 3b als Distanz der größten Breite des sichtbaren ovalen Rohrquerschnitts, sowie als Linie B die Breite des als Band ebenfalls sichtbaren Wasserstroms 4 eingezeichnet. Die Länge der Linie D ist als Maß d1 eingezeichnet; die Länge der Linie B ist als Maß d2 eingezeichnet.

Aus der Kenntnis der tatsächlichen Geometrie und der Abmessungen des Kanalrohrs kann aus dem Verhältnis von d1 und d2 anhand der bekannten Maße und Geometrie des Kanalrohrs die wahre Breite d2 des Wasserstroms 4 errechnet und daraus wiederum anhand der bekannten Geometrie des Kanalrohrs der Fließquerschnitt berechnet werden. Aus der Fließgeschwindigkeit, die, wie eingangs schon erwähnt, experimentell bestimmt oder aus bekannten Parametern wie Gefälle, Fließwiderstand usw. oder bekannten Werten aus früheren Messungen genommen werden kann, ergibt sich dann die Durchflussmenge pro Zeiteinheit.

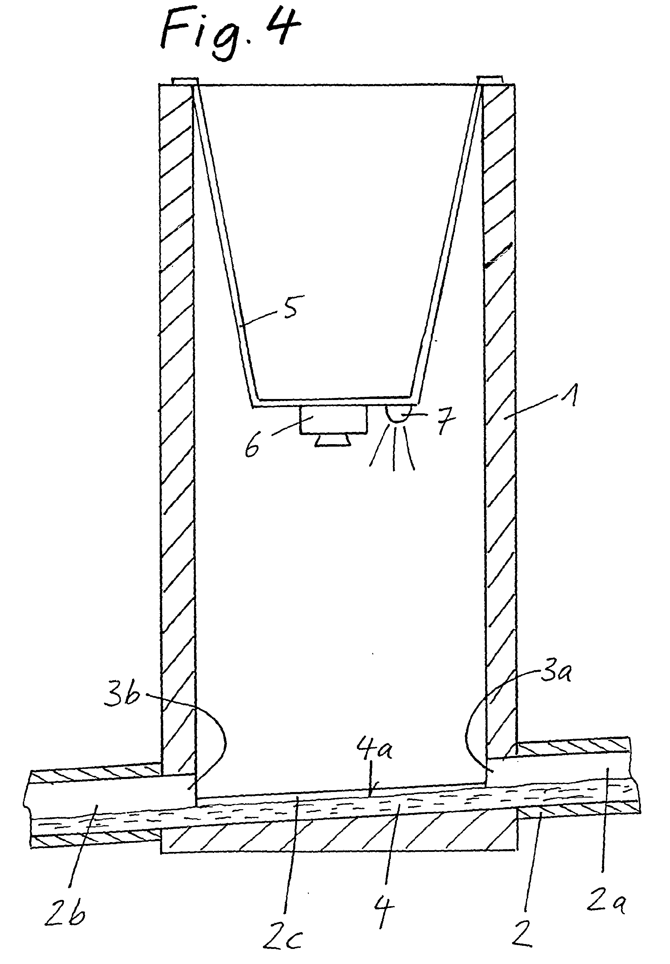

Figur 4 zeigt eine Anordnung ähnlich Figur 1 zur Durchführung des beschriebenen Verfahrens bei größeren Schachttiefen. Statt gerade über oder in der oberen Schachtöffnung hält ein modifiziertes Gestell 5 den Fotoapparat 6 und die Lichtquelle 7 in einer abgesenkten Position im Schacht, so daß auch bei einem Schacht mit großer Schachttiefe der Abstand des Fotoapparats 6 vom Boden des Schachts nur so groß ist, daß brauchbare Messbilder erzeugt werden. Das Gestell 5 ist dazu beim Ausführungsbeispiel in den Schacht hinein hängend ausgebildet. Alternativ (nicht dargestellt) wäre es auch möglich, ein auf dem Schachtboden aufstehendes Gestell zu verwenden, das man einfach mit Stangen oder dergleichen in den Schacht hinablässt bzw. hineinstellt.

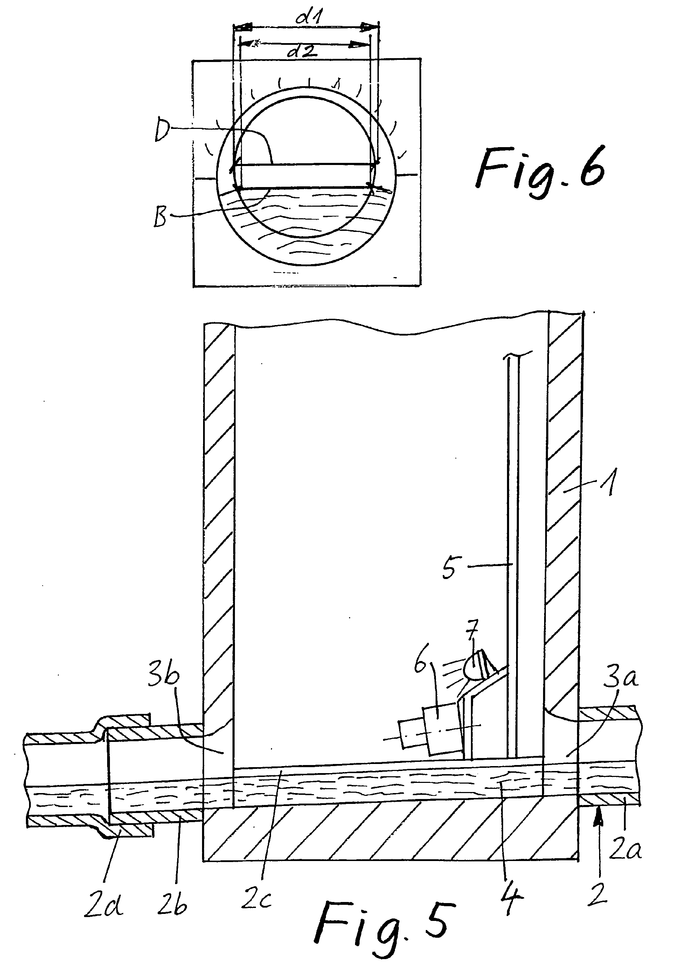

Figur 5 zeigt eine Darstellung eines Schachts ähnlich Figur 1, in welchem das Verfahren in einer abgewandelten Ausführungsform durchgeführt wird. In den Schacht ist an einem Gestell ein Fotoapparat 6 mit einer Lichtquelle 7 abgesenkt, wobei das Gestell 5 mit einer gegebenenfalls teleskopartig ausgebildeten Stange 8 verbunden ist, mit welcher das Gestell von über der Schachtöffnung aus abgesenkt bzw. heraufgezogen, gehandhabt und richtig positioniert werden kann. Es ist selbstverständlich möglich, den Fotoapparat 6 über einen elektrisch betätigbaren Schwenkmechanismus am Gestell 5 anzuordnen, so daß die Position des Fotoapparats für die Aufnahme leicht von außerhalb des Schachts justiert werden kann. Das macht besonders Sinn, wenn als Fotoapparat eine Digitalkamera mit Bildübertragung nach außerhalb des Schachts eingesetzt wird, so daß auch von außerhalb des Schachts das Blickfeld der Kamera kontrolliert werden kann.

Bei der Anordnung nach Figur 5 fotografiert der Fotoapparat 6 in das Kanalrohr des Kanalabschnitts 2b hinein. Dabei "sieht" der Fotoapparat die nächste Muffe 2d des Kanalrohrs.

Diese Ausführungsform des Verfahrens kann alternativ zur Ausführungsform nach Figur 1 der nach Figur 4 praktiziert werden. Es eignen sich besonders, wenn an der Kanalrohrausmündung oder -Einmündung aus dem bzw. in den Schacht 1 kein sauberer Kanalquerschnitt sichtbar ist, beispielsweise wenn, wie in Figur 5 dargestellt, ein unsauberer oder unregelmäßiger Übergang vom Schacht in das Kanalrohr vorhanden ist, beispielsweise wenn Übergänge aus Ortbeton geformt worden sind, so daß aus dem Bild der Mündungsöffnung keine brauchbaren Messergebnisse ableitbar sind. Beim axialen Hineinfotografieren in das Kanalrohr zwecks Abbildung der nächsten Rohrmuffe erhält man dann anhand der Muffe ein klar gezeichnetes Bild des Kanalquerschnitts und des Füllpegels darin.

Figur 6 zeigt in schematisierter Form, ähnlich Figur 3, ein Messbild, wie es mit der Anordnung nach Figur 5 erhältlich ist. Da etwa axial in das Kanalrohr hineinfotografiert wird, erscheint die Mündungsöffnung zum Schacht fast kreisrund, und entsprechend der Perspektive kleiner, aber mit gleichen Proportionen, erscheint die Abbildung der Kanalmuffe als fast kreisförmiger Ring. An der Position der Kanalmuffe ist dabei die Stoßfuge zwischen den Rohren innerhalb der Muffe sichtbar. Hier kann weder als größte Breite des Rohrquerschnitts die Durchmesserlinie D und die Breite des Füllpegels als Linie B mit den Längen d1 bzw. d2 erfasst und anhand der Kenntnis der Abmessungen und der Geometrie des Kanalrohrs aus dem Verhältnis von d1 und d2 sowie der Strömungsgeschwindigkeit die Durchflussmenge bestimmt werden.

## Patentansprüche

1. Verfahren zur Erfassung oder Messung der Durchflussmenge in einem Abwasserkanal (2a,2b,2c) in einem Kanalschacht (1) wobei ein optisches Bild des Kanalschachtbodenbereichs aus einer Position über oder inder oberen Kanalschachtöffnung oder aus einer Position innerhalb des Kanalschachts (1) erzeugt wird, in welchem die Einlassöffnung (3a) und/oder die Auslassöffnung (3b) des Abwasserkanals (2a,2b) in den bzw. aus dem Kanalschacht (1) in ovaler Verzeichnung sichtbar ist, und wobei weiter aus dem genommenen optischen Bild an der Abbildung der Einlassöffnung (3a) oder der Auslassöffnung (3b) die relativen Längen des Öffnungsdurchmessers (d1) des Kanalrohrs und der Breite (d2) des Wasserstromfließpegels in der Öffnung gemessen und aus deren Verhältnis und den bekannten Abmessungen und der bekannten Querschnittsgeometrie der Öffnung der tatsächliche Fließquerschnitt berechnet und hieraus unter Berücksichtigung der bekannten oder gemessenen Fließgeschwindigkeit die Durchflussmenge berechnet wird.

2. Verfahren zur Erfassung bzw. Messung der Durchflussmenge in einem Abwasserkanal (2a,2b,2c) in einem Kanalschacht (1), wobei ein vom Kanalschachtbodenbereich aus in den zuführenden oder den abführenden Kanalrohrabschnitt hinein gesehenes optisches Bild des Kanalrohrs erzeugt wird, in welchem die Stoßfuge zwischen zwei aufeinanderfolgenden Kanalrohrstücken im Bereich der nächstliegenden Muffenverbindung als gegebenenfalls etwas perspektivisch verzeichneter Ring sowie der Fließpegel sichtbar ist, und wobei weiter aus dem genommenen optischen Bild an der Abbildung der Stoßfuge die relativen Längen des Öffnungsdurchmessers (d1) und der Breite (d2) des Wasserstromfließpegels gemessen und aus deren Verhältnis und den bekannten Abmessungen und der bekannten Querschnittsgeometrie des Kanalrohrs der tatsächliche Fließquerschnitt berechnet und hieraus unter Berücksichtigung der bekannten oder gemessenen Fließgeschwindigkeit die Durchflussmenge errechnet wird.

## Claims

1. Process for determining or measuring the flow rate in a sewer (2a, 2b, 2c) in a sewer shaft (1), wherein an optical image of the sewer shaft bottom area is produced from a position above or in the upper sewer shaft opening or from a position within the sewer shaft (1), in which image the inlet opening (3 a) and/or the discharge opening (3b) of the sewer (2a, 2b) into and/or from the sewer shaft (1) is visible as an oval distortion, and in which, moreover, on the image of the inlet opening (3 a) or the discharge opening (3b) in the optical image taken, the relative lengths of the diameter of the opening (d1) of the sewer pipe and the width (d2) of the water flow level in the opening are measured and, from their ratio and the known dimensions and the known cross-section geometry of the opening, the actual flow cross-section is calculated and, from this, the flow rate is calculated, taking the known or measured flow velocity into consideration.

2. Process for determining or measuring the flow rate in a sewer (2a, 2b, 2c) in a sewer shaft (1), wherein an optical image of the sewer pipe, viewed from the bottom area of the sewer shaft into the supplying or the discharging section of the sewer pipe section, is produced, in which sewer pipe the butt joint between two consecutive sewer pipe sections is visible in the area of the subsequent spigot-and-socket joint as possibly slightly perspectively distorted ring, the flow level being also visible, and in which, moreover, on the image of the butt joint in the optical image taken, the relative lengths of the diameter of the opening (d1) and the width (d2) of the water flow level are measured and, from their ratio and the known dimensions and the known cross-section geometry of the sewer pipe, the actual flow cross-section is calculated and, from this, the flow rate is calculated, taking the known or measured flow velocity into consideration.

## Revendications

1. Procédé de détection ou de mesure du débit dans un égout (2a, 2b, 2c) dans une bouche d'égout (1), une image optique de la zone du fond de la bouche d'égout étant générée à partir d'une position au-dessus de ou dans l'ouverture supérieure de la bouche d'égout ou à partir d'une position à l'intérieur de la bouche d'égout (1), sur laquelle l'ouverture d'entrée (3a) et/ou l'ouverture de sortie (3b) de l'égout (2a, 2b) dans ou de la bouche d'égout (1) sont visibles en distorsion ovale, et les longueurs relatives du diamètre d'ouverture (d1) du tuyau d'égout et de la largeur (d2) du niveau d'écoulement d'eau dans l'ouverture étant mesurées à partir de l'image optique prise, au niveau de la reproduction de l'ouverture d'entrée (3a) ou de l'ouverture de sortie, et la section d'écoulement effective étant calculée à partir du rapport entre les longueurs, des dimensions connues et de la géométrie de section connue de l'ouverture et, basé sur cela, le débit étant calculé en tenant compte de la vitesse d'écoulement connue ou mesurée.

2. Procédé de détection ou de mesure du débit dans un égout (2a, 2b, 2c) dans une bouche d'égout (1), une image optique du tuyau d'égout vue de la zone du fond de la bouche d'égout en direction du tronçon du tuyau d'égout d'amenée ou de départ étant générée, sur laquelle le joint entre deux tronçons du tuyau d'égout se succédant est visible dans la zone du manchon de raccordement suivant, sous la forme d'un anneau le cas échéant légèrement distordu en perspective ainsi que le niveau d'écoulement, et les longueurs relatives du diamètre d'ouverture (d1) et de la largeur (d2) du niveau d'écoulement d'eau étant mesurées à partir de l'image optique prise, au niveau de la reproduction du joint et la section d'écoulement effective étant calculée à partir du rapport entre les longueurs, des dimensions connues et de la géométrie de section connue du tuyau d'égout et, basé sur cela, le débit étant calculé en tenant compte de la vitesse d'écoulement connue ou mesurée.
